# EUROPÄISCHE PATENTSCHRIFT

(11) **EP 2 275 217 B1**
(45) Veröffentlichungstag und Bekanntmachung des Hinweises auf die Patenterteilung: **11.09.2013**
(21) Anmeldenummer: 10007015.0
(22) Anmeldetag: 07.07.2010
(51) Int. Cl.: B23B 5/26, B23B 31/40, B23Q 3/06, B23B 3/10, B23Q 3/08

(54) **Vorrichtung zum Einspannen eines Werkstücks**
Device for clamping a workpiece
Dispositif de serrage d'une pièce à usiner

(30) Priorität: 18.07.2009 DE 102009033824
(43) Veröffentlichungstag der Anmeldung: 19.01.2011
(73) Patentinhaber: Sterman Technische Systeme GmbH, 78112 St. Georgen-Peterzell (DE)
(72) Erfinder: Sterman, Peter, 78112 St. Georgen (DE)
(74) Vertreter: Patentanwälte Westphal, Mussgnug & Partner

(56) Entgegenhaltungen:
- DE-B3-102006 061 466
- GB-A- 111 097
- JP-A- 2000 042 801
- US-A- 4 611 377
- US-A1- 2007 221 337

## Beschreibung

Die Erfindung betrifft eine Vorrichtung zum Einspannen eines Werkstücks, welches sowohl an einer Innenseite oder Stirnseite als auch an seiner Außenseite insbesondere spanabhebend zu bearbeiten ist und vorzugsweise ringförmig oder hülsenförmig ist und/oder eine stirnseitig offene Innenausnehmung hat, wobei die Vorrichtung zur Bildung einer Spannstelle ein Spannstück an einer drehbar antreibbaren Hohlspindel und mit Abstand dazu ein koaxiales frei drehbares Anschlagstück aufweist, sodass das Werkstück an einander abgewandten Stirnseiten oder Stirnflächen einspannbar ist, wobei das frei drehbare Anschlagstück in einem die Spannstelle umschließenden Futtergehäuse drehbar gelagert ist, wobei das Futtergehäuse mit seinem der Drehlagerung für das Anschlagstück abgewandten Rand konzentrisch zu dem Spannstück befestigt ist.

Derartige Vorrichtungen sind aus der DE 10 2004 057 256 B4 bekannt, werden von der Anmelderin gefertigt und haben sich bewährt. Die Größe der zu bearbeitenden Werkstücke, die in die bekannten Vorrichtungen eingespannt werden können, ist durch den konstruktiven Aufbau der Vorrichtungen begrenzt.

Eine ähnliche Vorrichtung ist aus JP-A-2000-042801 bekannt. Allerdings ist die dortige Vorrichtung nur zur Bearbeitung von länglichen, rohrförmigen Werkstücken geeignet, die horizontal eingespannt werden und damit parallel zu einer horizontal ausgerichteten Hohlspindel angeordnet sind.

Es besteht daher die Aufgabe, eine bekannte Vorrichtung so weiterzubilden, dass auch erheblich größere Werkstücke insbesondere auch an ihrer Innenseite bequem bearbeitet werden können.

Zur Lösung dieser Aufgabe ist erfindungsgemäß bei einer Vorrichtung der eingangs genannten Art vorgesehen, dass die Hohlspindel vertikal ausgerichtet ist und an die ihrer Oberseite das Spannstück trägt, dass das Anschlagstück zur Durchführung der Einspann- und der Lösebewegung in axialer Richtung verstellbar an dem Futtergehäuse angeordnet ist, dass das Spannstück mit der Hohlspindel einen Hohlraum umschließt, der so bemessen ist, dass in dem Hohlraum Platz für einen in radialer Richtung verfahrbaren Schlitten vorhanden ist, und dass in dem Hohlraum ein Werkzeughalter auf dem Schlitten angeordnet ist, so dass dieser in axialer und radialer Richtung verstellbar ist.

Zwar erfordert die zusätzliche axiale Verstellmöglichkeit des bisher axial festgelegten Anschlagstücks einen erhöhten konstruktiven Aufwand an dem Anschlagstück, durch die somit mögliche axiale Festlegung des Spannstücks kann das Spannstück jedoch als Werkstückauflage auch für Ringe mit einem Durchmesser von 1 m oder mehr ausgebildet werden. Dadurch ist es möglich, beispielsweise einen Ring von 1 m Durchmesser oder mehr mit einem entsprechend großen Innendurchmesser am Spannstück der Hohlspindel festzulegen und dann das Werkstück mit dem Werkzeug des Werkzeughalters an seiner Innenseite, die bei der vorbekannten Vorrichtung nur bis zu einem gewissen Bereich von außen zugänglich ist, problemlos bearbeiten zu können.

Von Vorteil ist weiter, dass mit der Anordnung des auf dem Schlitten befindlichen Werkzeughalters in dem Hohlraum das Werkzeug nicht mehr von außen an die radial nach innen weisenden Bearbeitungsflächen zugeführt werden muss. Somit ist die Bearbeitung großer Innendurchmesser und Ringabmessungen mit Werkzeugen in einer üblichen Dimensionierung möglich.

Günstige Verhältnisse beim Aufspannen insbesondere großer und/oder schwerer Werkstücke werden dadurch erreicht, dass die Hohlspindel vertikal ausgerichtet ist und an ihrer Oberseite das Spannstück trägt. Von Vorteil ist dabei, dass das Spannstück als Auflage für das Werkstück verwendbar ist. Somit kann der erforderliche konstruktive Aufwand zur Aufnahme des Eigengewichts des Werkstücks möglichst gering gehalten werden.

Zur Bearbeitung der radial nach außen weisenden Bearbeitungsflächen kann radial außerhalb der Spannstelle ein weiterer Werkzeughalter vorgesehen sein, der radial und axial verstellbar angeordnet ist. In dieser Anmeldung werden die Begriffe radial, axial und Umfangsrichtung in Bezug auf die Rotationsbewegung des Spannstücks verstanden.

Zur einfachen Zuführung des Werkzeugs für die Innenbearbeitung kann vorgesehen sein, dass das Futtergehäuse im Bereich der Spannstelle für das Werkstück wenigstens ein Fenster für den Zutritt des weiteren Werkzeughalters zur Außenseite des Werkstücks hat. Vorzugsweise ist das Fenster so dimensioniert und angeordnet, dass es für die Zuführung des Werkstücks zur Spannstelle eingerichtet ist.

Eine bevorzugte Ausgestaltung kann vorsehen, dass der Werkzeughalter und ein das Spannstück antreibender Antrieb auf einer gemeinsamen Unterlage befestigt sind. Alternativ oder zusätzlich kann der weitere Werkzeughalter auf der Unterlage befestigt sein.

Alternativ oder zusätzlich kann (können) der Werkzeughalter und/oder der weitere Werkzeughalter einerseits und das Futtergehäuse andererseits auf einer gemeinsamen Unterlage befestigt sein.

Von Vorteil ist dabei, dass besonders für die Bearbeitung großer Werkstücke mit Durchmessern von 1 m und mehr das Eigengewicht der Werkstücke durch die gemeinsame Unterlage mit vergleichsweise geringem konstruktiven Aufwand aufgenommen werden kann. Besonders günstig ist es dabei, wenn die Unterlage horizontal ausgerichtet ist und beispielsweise einen Teil eines Fußbodens bildet oder auf einem Fußboden angeordnet ist.

Um an dem Futtergehäuse Fenster für die Zuführung von großen Werkstücken zur Spannstelle zu bilden, kann vorgesehen sein, dass das Futtergehäuse vertikale Tragesäulen aufweist, die eine Lagerung des Anschlagstücks tragen. Vorzugsweise weist das Futtergehäuse drei Tragesäulen auf. Zwei benachbarte Tragsäulen begrenzen somit jeweils ein Fenster, durch welches Werkstücke und/oder Werkzeuge zugeführt werden können oder durch welche eine Sichtkontrolle des Bearbeitungsvorgangs erfolgen kann.

Für eine deformationsfreie oder zumindest möglichst deformationsarme Aufspannung des Werkstücks kann vorgesehen sein, dass das Spannstück werkstückseitig drei in Umfangsrichtung zueinander beabstandete und axial über das übrige Spannstück überstehende Auflagevorsprünge aufweist. Vorzugsweise greifen die Auflagevorsprünge punktförmig an dem Werkstück an. Hierzu können die Auflagevorsprünge als Auflagebolzen ausgebildet sein. Es ist somit an dem Spannstück eine Dreipunktauflage für das Werkstück ausgebildet.

Besonders günstig ist es dabei, wenn die Auflagevorsprünge in Umfangsrichtung einen gleichmäßigen Abstand zueinander aufweisen. Bevorzugt sind die Auflagevorsprünge in Umfangsrichtung unter 120° zueinander angeordnet. Hierdurch wird eine gleichmäßige Gewichtsverteilung auf die Auflagevorsprünge erreicht.

Zur zusätzlichen Abstützung der teilweise ein erhebliches Eigengewicht aufweisenden Werkstücke können an dem Spannstück in Umfangsrichtung zwischen den Auflagevorsprüngen axial verstellbare Stützvorsprünge vorgesehen sein. Die Stützvorsprünge können als Stützbolzen ausgebildet sein. Durch die Möglichkeit, die Stützvorsprünge axial zu verstellen, können diese nach Auflage des Werkstücks auf die Auflagevorsprünge an das Werkstück herangefahren werden, ohne das Werkstück zu deformieren. Dies bietet den Vorteil gegenüber der festen Anordnung von mehr als drei Auflagevorsprüngen, dass immer vorhandene Fertigungstoleranzen bei der Fertigung des Spannstücks und/oder des zu bearbeitenden Werkstücks nicht zu Deformationen der eingelegten Werkstücke führen, sondern individuell ausgeglichen werden können.

Zur Fixierung des Werkstücks in der Spannstelle kann vorgesehen sein, dass das Anschlagstück werkstückseitig drei in Umfangsrichtung zueinander beabstandete und axial über das übrige Anschlagstück überstehende Haltevorsprünge aufweist. Die Haltevorsprünge können als Haltebolzen ausgebildet sein.

Die Gefahr einer Deformation des Werkstücks beim Einspannen in die Spannstelle wird weiter verringert, wenn die Auflagevorsprünge und die Haltevorsprünge paarweise an in Umfangsrichtung übereinstimmenden Stellen vorgesehen sind. Die Auflagevorsprünge und die Haltevorsprünge sind somit paarweise in axialer Richtung fluchtend angeordnet und bringen auf das Werkstück Haltekräfte ein, die jeweils vom anderen Vorsprung eines Paares aufgenommen werden.

Eine einfache Anpassung des Spannstücks an das Werkstück wird ermöglicht, wenn die Stützvorsprünge hydraulisch verstellbar ausgebildet sind.

Die Auflagevorsprünge und/oder die Haltevorsprünge können an dem Spannstück beziehungsweise dem Anschlagstück axial unverschieblich angeordnet sein. Es kann vorgesehen sein, dass die Auflagevorsprünge und/oder die Haltevorsprünge radial verstellbar angeordnet sind. Von Vorteil ist dabei, dass die Position der Auflagevorsprünge und/oder der Haltevorsprünge an unterschiedliche Durchmesser des zu bearbeitenden Werkstücks angepasst werden kann.

Eine zumindest teilweise Bearbeitung der axial orientierten Seitenflächen des Werkstücks in einer Aufspannung mit der Innen- und/oder Außenbearbeitung wird ermöglicht, wenn die Auflage-, Halte- und/oder Stützvorsprünge in radialer Richtung eine Breite haben, die kleiner als die Breite des zur Bearbeitung bestimmten Werkstücks im Bereich der Auflage-, Halte-und/oder Stützvorsprünge ist. Von Vorteil ist dabei, dass genügend Spielraum für eine genaue Zentrierung des Werkstücks ausgebildet ist. Vorzugsweise sind die Auflage-, Halte-und/oder Stützvorsprünge innerhalb eines gemeinsamen radialen Bereichs angeordnet, welcher kleiner als die radiale Erstreckung des Werkstücks ist. Somit ist die Bearbeitung der Seitenflächen außerhalb dieses Bereichs möglich, ohne das Werkstück umzuspannen.

Besonders günstig ist es dabei, wenn die Auflage-, Halte-und/oder Stützvorsprünge zum axialen Eingreifen in eine oder jeweils eine an dem Werkstück ausgebildete, in Umfangsrichtung umlaufende Nut eingerichtet sind. Von Vorteil ist dabei, dass die an dem Nutgrund der Nut angreifenden Vorsprünge die Bearbeitung der Seitenflächen überhaupt nicht behindern, weil der Nutgrund selbst nicht bearbeitet werden muss, sondern gegenüber den Seitenflächen zurückgenommen ist und so die durch die bearbeiteten Seitenflächen gebildete Anlageflächen nicht von dem unbearbeiteten Nutgrund gestört werden. Der Nutgrund kann somit unbearbeitet bleiben. Das Werkstück muss nicht zwischen den Bearbeitungsschritten umgespannt werden.

Für eine Ausrichtung des Werkstücks in der Spannstelle vor der Spanbearbeitung kann eine Zentriereinrichtung vorgesehen sein, welche drei an der Außenseite des Werkstücks in Umfangsrichtung vorzugsweise gleichmäßig voneinander beabstandete und zumindest teilweise radial zustellbare Schubelemente aufweist.

Eine genaue, automatisierte Zentrierung des Werkstücks in der Spannstelle kann erreicht werden, wenn eine Steuerung vorgesehen ist, mit welcher die Zustellbewegung der Schubelemente steuerbar ist. Beispielsweise kann die Steuerung als CNC-Steuerung ausgebildet sein.

Besonders günstig ist es, wenn die Schubelemente an ihrem dem Werkstück zugewandten Ende in einer Radialebene einen kreisrunden oder rollenförmigen Querschnitt aufweisen. Somit können die Schubelemente das Werkstück in die zentrierte Position schieben oder führen, wobei der Angriffspunkt der Schubelemente gegebenenfalls an dem Werkstück wandern kann, bis die zentrierte Position des Werkstücks erreicht ist.

Eine konstruktiv einfache Ausführung kann vorsehen, dass zwei Schubelemente an einer gemeinsamen Gabel angeordnet sind. In diesem Fall wird die Position des dritten Schubelements und/oder der Gabel verstellt, bis das Werkstück zentriert ist. Dies ist besonders vorteilhaft bei Werkstücken mit in einer Radialebene runder Außenkontur einsetzbar.

Eine Ausgestaltung der Erfindung von eigenständiger Bedeutung kann eine Beladevorrichtung zum Einführen eines Werkstücks in die Spannstelle vorsehen, welche Beladevorrichtung zwei Haltebereiche für je ein Werkstück hat und um eine zwischen den Haltebereichen und in der Peripherie der Vorrichtung angeordnete Schwenkachse horizontal schwenkbar ist. Von Vorteil ist dabei, dass an den Haltebereichenen zwei Werkstücke aufgenommen werden können, wobei sich deren unter Umständen beträchtliche aber gleich große Eigengewichte nach Art einer Waage kompensieren, sodass die Antriebe der Haltevorrichtungen verhältnismäßig gering dimensioniert werden müssen. Die Beladevorrichtung kann beispielsweise im gleichen Arbeitsgang ein bearbeitetes Werkstück aus der Spannstelle entnehmen und ein unbearbeitetes Werkstück in diese einsetzen.

Gemäß einer Ausgestaltung kann vorgesehen sein, dass die Schwenkachse an einer der Tragesäulen des Futtergehäuses ausgebildet ist. Von Vorteil ist dabei, dass der Platzbedarf der Vorrichtung vergleichsweise gering ist.

Zur Zuführung und Entnahme der Werkstücke kann ein 5-Achsen-Manipulator mit Greifvorrichtung zum Beladen der Vorrichtung vorgesehen sein.

Zur Kontrolle der gefertigten Maße kann eine Messeinrichtung vorgesehen sein, mit welcher die bearbeiteten Oberflächen des Werkstücks in der Spannstelle vermessbar sind. Es können somit Fertigungsfehler beispielsweise aufgrund eines ausgebrochenen Schneidwerkstoffs schon in aufgespannter Position des Werkstücks erkannt und unmittelbar korrigiert werden. Besonders hohe Kontrollgenauigkeiten können erreicht werden, wenn die Messeinrichtung temperaturkompensiert ist.

Die Messeinrichtung verfügt vorzugsweise über einen Messtaster, der auf die zu vermessende Oberfläche geführt werden kann, wobei das erfasste Maß aus der Mitführung einer Aufhängung oder Zustelleinrichtung abgeleitet wird. Beispielsweise kann eine 5-Achs-Messmaschine eingesetzt werden. Eine kostengünstige Variante sieht jedoch vor, dass die Messeinrichtung über eine kardanische Aufhängung befestigt ist. Diese Aufhängung weist Messfühler auf, die die Positionsbestimmung des Messtasters aus der Verstellung an den Gelenken der Aufhängung erlauben.

Die Messeinrichtung kann somit gesteuert, teilgesteuert von Hand oder nur von Hand an die Messstelle geführt werden. Alle Messstellen werden entsprechend dem programmierten Ablauf und einem Modell des Werkstücks entsprechend einer grafischen Oberfläche in einer EDV-Anlage zugeordnet. Die Bearbeitungsparameter können wahlweise korrigiert und überschrieben werden, insbesondere um Fertigungsabweichungen zu korrigieren.

Die Erfindung wird nun anhand eines Ausführungsbeispiels näher erläutert, ist aber nicht auf dieses Ausführungsbeispiel beschränkt. Weitere Ausführungsbeispiele ergeben sich durch Kombination von Merkmalen der Ansprüche untereinander und/oder mit einzelnen oder mehreren Merkmalen des Ausführungsbeispiels.

Es zeigt in teilweise schematisierter Darstellung
- Fig. 1: eine Seitenansicht einer erfindungsgemäßen Vorrich- tung,
- Fig. 2: eine weitere Seitenansicht auf die Vorrichtung ge- mäß Fig. 1,
- Fig. 3: die Seitenansicht gemäß Fig. 2 auf die Vorrichtung mit geöffneter Spannstelle,
- Fig. 4: eine Ansicht von oben auf die Vorrichtung gemäß Fig. 1,
- Fig. 5: eine Detailansicht von Fig. 2 und
- Fig. 6: eine weitere Detailansicht der Vorrichtung gemäß Fig. 1.

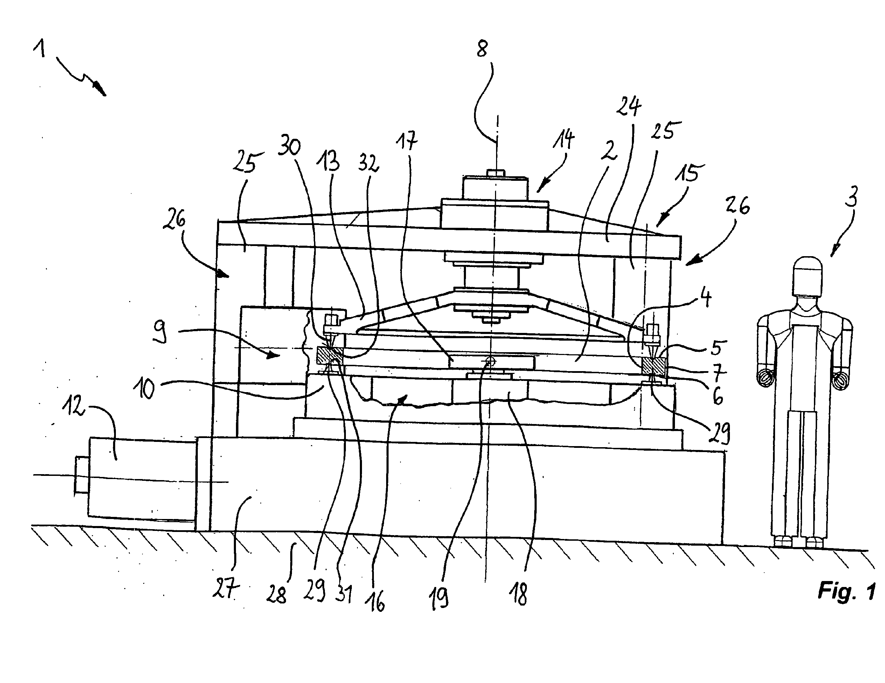

Figur 1 zeigt in einer schematischen Seitenansicht eine im ganzen mit 1 bezeichnete erfindungsgemäße Vorrichtung zum Einspannen eines Werkstücks 2. Zum Größenvergleich ist eine stilisierte Bedienperson 3 dargestellt.

Das Werkstück 2 ist ringförmig ausgebildet und weist eine Innenseite 4, zwei Stirnseiten 5, 6 und eine Außenseite 7 auf.

Das Werkstück 2 ist kreisrund ausgebildet und konzentrisch zu einer Rotationsachse 8 der Vorrichtung 1 angeordnet. In dieser Anmeldung werden die Begriffe axial, radial und Umfangsrichtung in Bezug auf diese Rotationsachse 8 verwendet.

Ist die axiale Erstreckung des Werkstücks 2 größer als in Figur 1 dargestellt, so kann auch ein hülsenförmiges Werkstück 2 vorliegen.

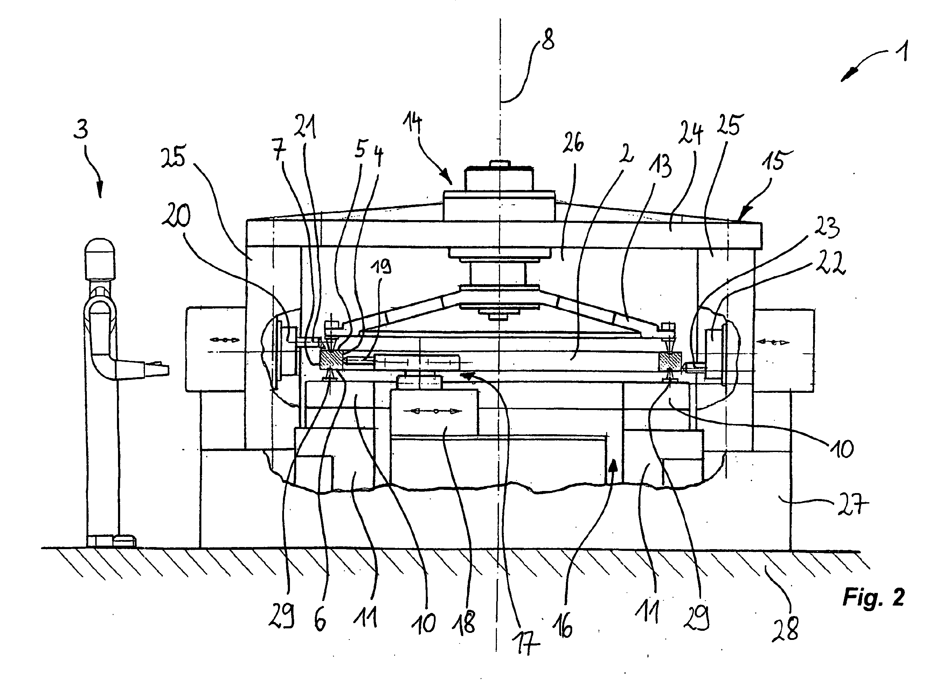

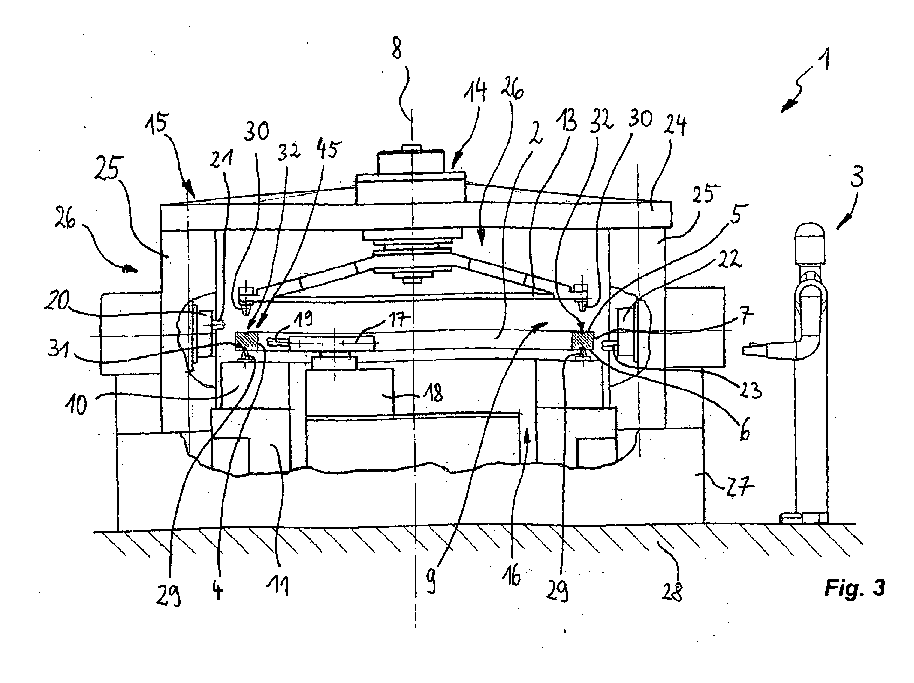

Das Werkstück 2 ist in einer Spannstelle 9 der Vorrichtung 1 angeordnet. Die Spannstelle 9 weist hierbei ein Spannstück 10 auf, welches an einer in Figur 2 und 3 ersichtlichen Hohlspindel 11 drehfest angeordnet ist.

Die Hohlspindel 11 und somit das Spannstück 10 kann mittels eines Antriebs 12 in Rotation um die Rotationsachse 8 versetzt und somit angetrieben werden.

In axialem Abstand zu dem Spannstück 10 weist die Vorrichtung 1 ein Anschlagstück 13 auf, welches in einem Lager 14 um die Rotationsachse 8 frei drehbar gelagert ist. Das Anschlagstück 13 bildet somit das Gegenstück zu dem Spannstück 10 der Spannstelle 9.

Das Lager 14 des Anschlagstücks 13 ist in einem Futtergehäuse 15 festgelegt.

Das Anschlagstück 13 ist mit einer nicht weiter dargestellten Hydraulik in axialer Richtung verstellbar an dem Futtergehäuse 15 angeordnet, so dass das in die Spannstelle 9 eingelegte Werkstück 2 durch axiale Zustellung des Anschlagstücks 13 gegen das Spannstück 10 eingespannt werden kann.

In der in Figur 1 dargestellten eingespannten Position wird somit das Anschlagstück 13 bei der Rotation des Spannstücks 10 mitgeführt.

Das Spannstück 10 und die in Figur 2 dargestellte Hohlspindel 11 sind ringförmig kreisrund ausgebildet und konzentrisch zu der Rotationsachse 8 angeordnet. Das Spannstück 10 und die Hohlspindel 11 umschließen somit einen Hohlraum 16, der sich axial in das Innere des Werkstücks 2 fortsetzt.

Der Hohlraum 16 ist so bemessen, dass in ihm Platz für einen Werkzeughalter 17 vorhanden ist. Der Werkzeughalter 17 ist auf einem in radialer Richtung verfahrbaren Schlitten 18 angeordnet und kann gegenüber diesem in axialer Richtung verstellt werden. Somit kann das an dem Werkzeughalter 17 zur Bearbeitung der Innenfläche 4 eingespannte Werkzeug 19 in axialer und radialer Richtung verstellt werden.

Der Schlitten 18 ist ebenfalls in dem Hohlraum 16 angeordnet.

Zur Bearbeitung der axialen Seitenflächen 5 und 6 ist ein in Figur 2 dargestellter weiterer Werkzeughalter 20 vorgesehen, der ein radial und axial verstellbares Werkzeug 21 trägt.

Ein dritter Werkzeughalter 22 trägt ein ebenfalls axial und radial verstellbares Werkzeug 23, welches zur Bearbeitung der Außenseite 7 vorgesehen ist.

Bei weiteren Ausführungsbeispielen können die Werkzeughalter 20 und 22 als gemeinsamer Werkzeughalter ausgebildet sein.

Das Futtergehäuse 15 weist gemäß Figur 1 bis 3 einen das Lager 14 aufnehmenden Deckel 24 auf, welcher auf Tragesäulen 25 angeordnet ist. Die Tragesäulen 25 sind in Umfangsrichtung voneinander beabstandet und schließen somit zwischen sich Fenster 26 ein, durch welche das Werkstück 2 in die Spannstelle 9 zugeführt und die Werkzeuge 21, 23 zu der Außenseite 7 beziehungsweise den Stirnseiten 5, 6 zugestellt werden können.

Die Rotationsachse 8 der Vorrichtung 1 ist vertikal ausgerichtet, so dass das Spannstück 10 das Werkstück 2 an seiner Oberseite trägt. Ebenso ist das Spannstück 10 an der Oberseite der Hohlspindel 11 angeordnet.

Die Werkzeughalter 18, 20 und 22 sowie der Antrieb 12 sind an einer gemeinsamen Unterlage 27 befestigt, auf der auch die Tragesäulen 25 aufgestellt sind. Die Unterlage 27 ruht auf dem Fußboden 28.

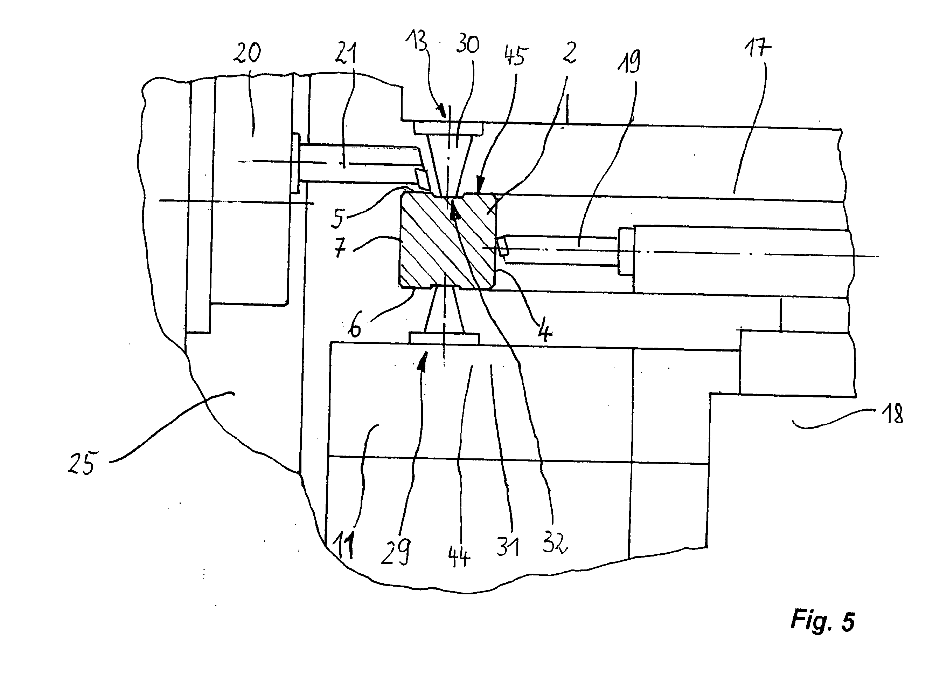

An der Oberseite des Spannstücks 10 sind Auflagevorsprünge 29 angeordnet, auf die das Werkstück 2 aufgelegt ist. Die Auflagevorsprünge 29 sind jeweils als sich axial verjüngende, einen runden Querschnitt aufweisende Auflagebolzen ausgebildet, wie Figur 5 deutlicher zeigt.

Insgesamt weist das Spannstück 10 drei Auflagevorsprünge 29 auf, die in Umfangsrichtung einen gleichmäßigen Abstand zueinander aufweisen und somit in einem Winkel von 120° zueinander angeordnet sind.

Zwischen den Auflagevorsprüngen 29 sind an der Oberseite des Spannstücks 10 nicht weiter dargestellte Stützvorsprünge angeordnet, die hydraulisch axial verstellbar sind, um an die Position der Stirnseite 6 des Werkstücks 2 zwischen den Auflagepunkten der Auflagevorsprünge 29 angepasst werden zu können. Die Stützvorsprünge sind ebenfalls in Bolzenform ausgebildet.

Die Auflagevorsprünge 29 und die Stützvorsprünge sind an dem Spannstück 10 drehfest angeordnet und stehen über das übrige Spannstück 10 axial über.

An der dem Werkstück 2 zugewandten Seite des Anschlagstücks 13 sind Haltevorsprünge 30 ausgebildet, die über das übrige Spannstück 13 axial überstehen und an dem Werkstück 2 angreifen.

Die Haltevorsprünge 30 sind so angeordnet, dass sie an dem Werkstück 2 an Angriffspunkten angreifen, welche den Angriffspunkten der Auflagevorsprünge 29 in axialer Richtung gegenüber angeordnet sind. Beim Einspannen des Werkstücks 2 in der Spannstelle 9 entstehen somit keine Hebelkräfte, die aus einer in Umfangsrichtung versetzten Position von Auflagevorsprüngen 29 und Haltevorsprüngen 30 resultieren würden und die eine Verformung des Werkstücks 2 zur Folge hätten.

Die Auflagevorsprünge 29 greifen in eine in Figur 5 näher ersichtliche, an dem Werkstück 2 schon vor der Endbearbeitung ausgebildete, in Umfangsrichtung umlaufende Nut 31 ein, deren Nutgrund gegenüber der unbearbeiteten Stirnseite 6, aber auch gegenüber der bearbeiteten Fläche der Stirnseite 6 axial ins Innere des Werkstücks 2 zurückgesetzt ist. Die Stirnseite 6 braucht somit im Bereich der Nut 31 nicht bearbeitet zu werden, um ein definiertes Maß der Stirnseite 6 zu erreichen, da das Material des Werkstücks 2 die an der Stirnseite 6 gefertigte Auflagefläche im Bereich der Nut 31 nicht stört. Es ist somit während der vollständigen Spanbearbeitung der Flächen 4, 5, 6, 7 kein Umspannen des Werkstücks 2 erforderlich.

Die Haltevorsprünge 30 greifen in eine in Figur 5 näher ersichtliche, an der Stirnseite 5 bereits vor der in der Vorrichtung 1 durchgeführten Bearbeitung ausgebildete, in Umfangsrichtung ringförmig umlaufende Nut 32 ein.

Da der Nutgrund der Nut 32 ebenso wie bei der Nut 31 gegenüber dem Fertigungsmaß der Stirnseite 5 zurückgenommen ist, braucht das Werkstück 2 im Bereich der Nut 32 nicht bearbeitet zu werden, um an der Stirnseite 5 eine definierte Anlagefläche zu schaffen.

Um die radial innerhalb der Auflagevorsprünge 29 beziehungsweise der Haltevorsprünge 30 liegenden Bereiche 44 beziehungsweise 45 der Stirnseiten 6 beziehungsweise 5 bearbeiten zu können, ist ein nicht weiter dargestelltes, in dem Hohlraum 16 angeordnetes und von der Rotationsachse 8 her zustellbares Werkzeug vorgesehen.

Figur 3 zeigt die Vorrichtung 1 mit geöffneter Spannstelle 9, bei welcher also das Anschlagstück 13 axial von dem Werkstück 2 weggefahren, also angehoben angeordnet ist. In dieser Position kann das Werkstück 2 vor der Bearbeitung in die Spannstelle 9 eingelegt beziehungsweise nach der Bearbeitung aus ihr entnommen werden.

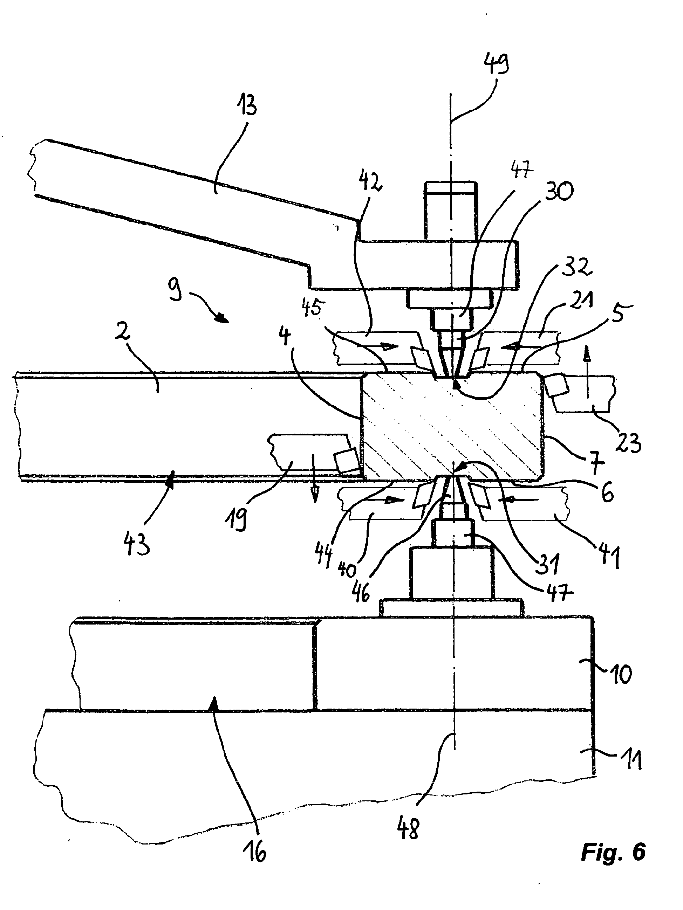

Figur 6 zeigt eine weitere Detailansicht auf das in der Spannstelle 9 eingespannte Werkstück 2.

Zur Verdeutlichung des Prinzips der Bearbeitung des Werkstücks 2 sind die Werkzeuge 19, 21, 23 sowie drei weitere Werkzeuge 40, 41, 42 gleichzeitig dargestellt. Es kann vorgesehen sein, dass die Werkzeuge 19, 21, 23, 40, 41, 42 an separaten oder gemeinsamen Werkzeughaltern befestigt sind. Beispielsweise können die Werkzeuge 19, 40, 42, an dem in die Innenausnehmung 43 des Werkstücks 2 eingreifenden Werkzeugträger 17 verfahrbar angeordnet sein, und/oder es kann vorgesehen sein, dass die Werkzeuge 21, 23, 41 an dem von außen zustellbaren Werkzeughalter 20 und/oder 22 verfahrbar angeordnet sind. Die Vorschubrichtung der Werkzeuge 19, 21, 23, 40, 41, 42 ist jeweils durch einen Pfeil angedeutet. Somit dient das Werkzeug 42 zur Bearbeitung des Bereichs 45, während das Werkzeug 40 zur Bearbeitung des Bereichs 44 vorgesehen ist.

Das Werkstück 2 liegt auf Stützvorsprüngen 46 auf, die über hydraulische Ausgleichskolben 47 an das durch die Auflagevorsprünge 29 und das Werkstück 2 vorgegebene Höhenniveau angepasst werden können, indem sie entlang der Achse 48 an das Werkstück 2 zugestellt werden können. Die Ausgleichskolben 47, die bei anderen Ausführungsbeispielen mechanisch und/oder elektromagnetisch betätigbar sind, stützen sich auf dem Spannstück 10 ab.

Die Stützvorsprünge 46 sind formgleich zu den Auflagevorsprüngen 29 ausgebildet und greifen in die Nut 31 ein und liegen an dem Nutgrund der Nut 31 an.

Im Ausführungsbeispiel sind drei Auflagevorsprünge 29 und sechs Stützvorsprünge 46 vorgesehen, die so beabstandet sind, dass der Umfang des eingespannten Werkstücks 2 in neun gleiche Segmente geteilt ist.

Da die radiale Erstreckung der Stützvorsprünge 46, also deren Durchmesser, geringer ist als die radiale Erstreckung der Nut 31, verbleibt ein Spiel, welches für die Zentrierung des Werkstücks 2 genutzt werden kann. Die Seitenfläche 6 muss nicht im Bereich der Nut 31 bearbeitet werden, da die Nut 31 das Fertigungsmaß der Seitenfläche 6 nicht beeinträchtigt. Das Werkstück 2 muss demnach nicht umgespannt werden, sondern kann in einer Aufspannung von allen Seiten 4, 5, 6, 7 bearbeitet werden, wie durch die gleichzeitig abgebildeten Werkzeuge 19, 21, 23, 40, 41, 42 verdeutlicht wird.

Von oben greifen Haltevorsprünge 30 in eine Nut 32 ein. Insgesamt sind neun Haltevorsprünge 30 vorgesehen. Es ist ersichtlich, dass auch die Haltevorsprünge 30 an ihren Berührungspunkten mit dem Werkstück 2 eine geringere radiale Erstreckung aufweisen, als die Nut 32, wodurch ein Spiel für Zentrierungen des Werkstücks 2 verbleibt.

Die Haltevorsprünge 30 weisen ebenfalls jeweils einen Ausgleichskolben 47 auf, welcher ein Verstellen des Haltevorsprungs 30 relativ zu dem Anschlagstück 13 entlang der Achse 49 erlaubt. Somit können die Haltevorsprunge 30 individuell an den Nutgrund der Nut 32 herangeführt werden, ohne das Werkstück 2 zu verformen.

Die Auflagevorsprünge 29 bzw. die Stützvorsprünge 46 einerseits und die Haltevorsprünge 30 andererseits sind paarweise an in Umfangsrichtung übereinstimmenden Stellen des Werkstücks 2 vorgesehen, wodurch die Achsen 48, 49 fluchtend ausgerichtet sind.

Die Werkzeuge 19, 40, 42 sind zur Bearbeitung der radial innerhalb der Nuten 31, 32 und damit radial innerhalb der Angriffspunkte der Spannstelle 9 an dem Werkstück 2 angeordneten Flächen des Werkstücks 2 vorgesehen und an einem oder mehreren in dem Hohlraum 16 angeordneten Werkzeugträgern verfahrbar befestigt. Der oder die Werkzeugträger ragt/ragen hierzu in die Innenausnehmung 43 des Werkstücks 2 hinein.

Die Werkzeuge 21, 23, 41 sind zur Bearbeitung der radial außerhalb der Nuten 31, 32 und damit radial außerhalb der Angriffspunkte der Spannstelle 9 an dem Werkstück 2 angeordneten Flächen des Werkstücks 2 vorgesehen und an einem oder mehreren von außen an das Werkstück 2 zustellbaren Werkzeugträgern verfahrbar befestigt. Der oder die Werkzeugträger können hierzu beispielsweise durch Fenster 26 zustellbar sein.

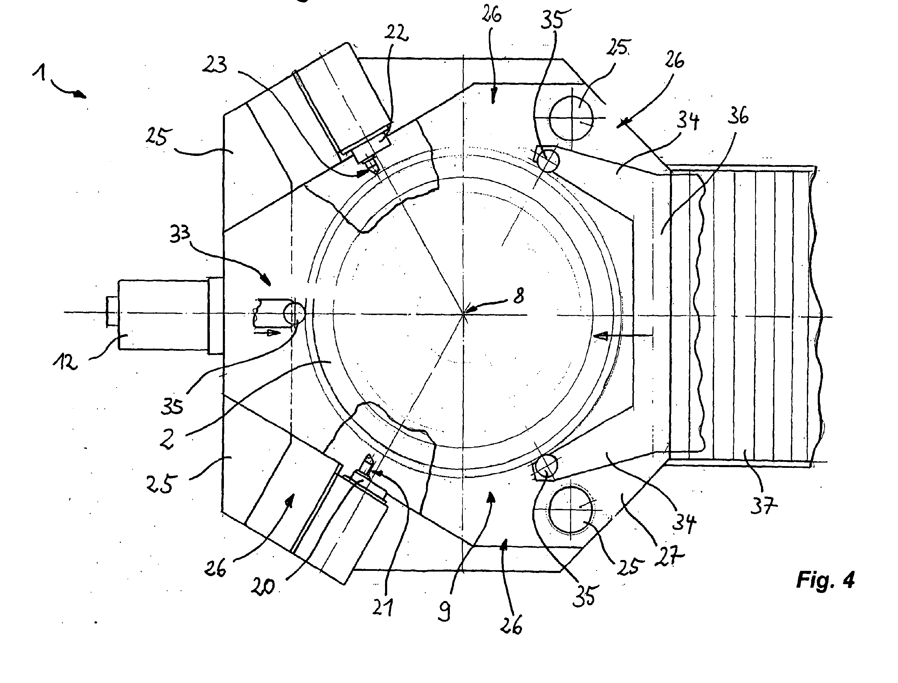

Figur 4 zeigt eine Ansicht von oben auf die Vorrichtung 1, in welcher eine Beladevorrichtung für das Einführen beziehungsweise die Entnahme des Werkstücks ersichtlich ist.

Es ist ersichtlich, dass die Tragesäulen 25 die Spannstelle 9 radial und in Umfangsrichtung umgeben und zwischen sich Fenster 26 einschließen, durch welche die zur Außen- und Seitenbearbeitung vorgesehenen Werkzeuge 21, 23 sowie das Werkstück 2 zugeführt werden können.

Vor der Bearbeitung muß das in die Spannstelle 9 eingelegte Werkstück 2 in Bezug auf die Rotationsachse 8 zentriert werden, um bei der Bearbeitung einen möglichst gleichmäßigen Rundlauf zu erreichen und um definierte Bearbeitungsmaße zu erhalten.

Hierzu weist die Vorrichtung 1 drei Schubelemente 33 und 34 auf, welche über an ihren Enden angeordnete Rollen 35 an der Außenseite 7 des in Figur 4 nicht weiter dargestellten Werkstücks 2 angreifen. Die Schubelemente 33, 34 weisen an ihren jeweiligen dem eingespannten Werkstück 2 zugewandten Ende einen in der Zeichenebene, also einer Radialebene, kreisrunden Querschnitt auf.

Die Schubelemente 33, 34 sind mit einer CNC-Steuerung in der in Figur 4 dargestellten Zeichenebene verstellbar, so dass das Werkstück 2 koaxial zu der Rotationsachse 8 ausgerichtet werden kann. Hierbei wird durch die Rollen 35 jeweils ein in Umfangsrichtung punktueller Angriff der Schubelemente 33, 34 an der Außenfläche 7 des Werkstücks 2 erreicht, so dass die Zentrierung keine oder zumindest im Rahmen der Bearbeitungsgenauigkeit keine messbare Verformung des Werkstücks 2 bewirkt.

Das Schubelement 33 ist zurückziehbar ausgebildet und kann - wie durch einen Pfeil angedeutet - auf das Werkstück 2 zu und von diesem weg bewegt werden. Das Schubelement 33 weist einen nicht weiter dargestellten Zentriermesstaster auf, mit welchem der Zentriervorgang überwacht und/oder angesteuert werden kann.

Die Positionierrollen 35 sind in Umfangsrichtung des Werkstücks 2 in einem Winkel von 120° zueinander angeordnet.

Die an der Stirnseite 6 ausgebildete Nut 31 weist (vgl. Fig. 5) in radialer Richtung eine Breite auf, die größer als der Durchmesser der Haltevorsprünge 29 ist, so dass ein Spielraum für die Zentrierung verbleibt.

Die Schubelemente 34 sind an einer Gabel 36 ausgebildet, mit welcher das zu bearbeitende Werkstück 2 über eine Rollenbahn 37 in die Spannstelle 9 eingeführt werden kann.

Bei einem weiteren Ausführungsbeispiel ist an einer Tragesäule 25 eine Beladevorrichtung vorgesehen, die zwei Hebelarme aufweist und um eine in der Tragesäule verlaufende Schwenkachse schwenkbar ist. Die Hebelarme sind starr miteinander verbunden, und an dem freien Ende jedes Hebelarms ist ein Haltebereich für ein Werkstück 2 ausgebildet. Die Hebelarme sind hierbei so angeordnet, dass sich die Eigengewichte der beiden in den Haltebereichen angeordneten Werkstücke gerade kompensieren. Diese Beladevorrichtung kann somit gleichzeitig ein in der Spannstelle 9 liegendes Werkstück 2 und ein weiteres auf einer Ablage 37 liegendes Werkstück aufnehmen und diese durch eine Schwenkbewegung gegeneinander austauschen. Somit wird das bearbeitete Werkstück aus der Spannstelle 9 entnommen und ein zu bearbeitendes Werkstück in die Spannstelle 9 eingeführt.

Die Vorrichtung 1 gemäß den Figuren 1 bis 5 weist ferner eine nicht weiter dargestellte Messeinrichtung auf, welche zur Kontrolle der an den Flächen 4, 5, 6, 7 gefertigten Maße eingerichtet ist. Hierzu ist die Messeinrichtung mit einem Messtaster versehen, welcher an die bearbeiteten Oberflächen 4, 5, 6, 7 herangeführt wird, wobei eine Aufhängung des Messtasters Messfühler aufweist, welche eine Positionsbestimmung des Messtasters relativ zu der Unterlage 27 beziehungsweise der Rotationsachse 8 erlauben.

Die Aufhängung des Messtasters ist über eine kardanische Aufhängung realisiert.

Bei der Vorrichtung 1 zum Bearbeiten der radialen und axialen Flächen 4, 5, 6, 7 eines Ring- oder hülsenförmigen Werkstücks 2 ist eine Spannstelle 9 mit einem angetriebenen Spannstück 10 und einem axial verschiebbaren, frei drehbaren Anschlagstück 13 gebildet, wobei das durch eine Hohlspindel 11 angetriebene Spannstück 10 in seinem radialen Inneren einen Hohlraum 16 umschließt, in welchem ein Werkzeughalter 17 mit einem Werkzeug 19 zur Drehbearbeitung von in Bezug auf die Angriffspunkte 29, 30, 46 der Spannstelle 9 radial innenliegenden Flächen 4, 44, 45 des Werkstücks 2 angeordnet ist.

## Patentansprüche

1. Vorrichtung (1) zum Einspannen eines Werkstücks (2), welches sowohl an einer Innenseite (4) und/oder Stirnseite (5, 6) als auch an seiner Außenseite (7) insbesondere spanabhebend zu bearbeiten ist und vorzugsweise ringförmig oder hülsenförmig ist und/oder eine stirnseitig offene Innenausnehmung (43) hat, wobei die Vorrichtung (1) zur Bildung einer Spannstelle (9) ein Spannstück (10) an einer drehbar antreibbaren Hohlspindel (11) und mit Abstand dazu ein koaxiales frei drehbares Anschlagstück (13) aufweist, sodass das Werkstück (2) an einander abgewandten Stirnseiten (5, 6) oder Stirnflächen einspannbar ist, wobei das. frei drehbare Anschlagstück (13) in einem die Spannstelle (9) umschließenden Futtergehäuse (15) drehbar gelagert ist, wobei das Futtergehäuse (15) mit seinem der Drehlagerung für das. Anschlagstück (13) abgewandten Rand (38) konzentrisch zu dem Spannstück (10) befestigt ist, **dadurch gekennzeichnet dass** die Hohlspindel (11) vertikal ausgerichtet ist und an ihrer Oberseite das Spannstück (10) trägt, dass das Anschlagstück (13) zur Durchführung der Einspann- und der Lösebewegung in axialer Richtung verstellbar an dem Futtergehäuse (15) angeordnet ist, dass das Spannstück (10) mit der Hohlspindel (11) einen Hohlraum (16) umschließt, der so bemessen ist, dass in dem Hohlraum (16) Platz für einen in radialer Richtung verfahrbaren Schlitten (18), vorhanden ist, und dass in dem Hohlraum (16) ein Werkzeughalter (17) auf dem Schlitten (18) angeordnet ist, so dass dieser in axialer und radialer Richtung verstellbar ist.

2. Vorrichtung (1) nach Anspruch 1,
**dadurch gekennzeichnet, dass** radial außerhalb der Spannstelle (9) ein weiterer Werkzeughalter (20, 22) vorgesehen ist, der radial und axial verstellbar angeordnet ist.

3. Vorrichtung (1) nach Anspruch 1 oder 2,
**dadurch gekennzeichnet, dass** das Futtergehäuse im Bereich der Spannstelle für das Werkstück (2) wenigstens ein Fenster (26) für den Zutritt des weiteren Werkzeughalters (20, 22) zur Außenseite (7) des Werkstücks (2) und/oder für die Zuführung des Werkstücks (2) zur Spannstelle (10) hat.

4. Vorrichtung (1) nach einem der Ansprüche 1 bis 3,
**dadurch gekennzeichnet, dass** der Werkzeughalter (17) und/oder der weitere Werkzeughalter (20, 22) einerseits und ein das Spannstück (10) antreibender Antrieb (12) und/oder das Futtergehäuse (15) andererseits auf einer gemeinsamen Unterlage (27) befestigt sind.

5. Vorrichtung (1) nach einem der Ansprüche 1 bis 4,
**dadurch gekennzeichnet, dass** das Futtergehäuse (15) vertikale Tragesäulen (25), vorzugsweise drei Tragesäulen (25), aufweist, die eine Lagerung (14) des Anschlagstücks (13) tragen.

6. Vorrichtung (1) nach einem der Ansprüche 1 bis 5,
**dadurch gekennzeichnet, dass** das Spannstück (10) werkstückseitig drei in Umfangsrichtung zueinander beabstandete und axial über das übrige Spannstück (10) überstehende Auflagevorsprünge (29), insbesondere Auflagebolzen, aufweist.

7. Vorrichtung (1) nach einem der Ansprüche 1 bis 6,
**dadurch gekennzeichnet, dass** an dem Spannstück (10) in Umfangsrichtung zwischen den Auflagevorsprüngen (29) axial vorzugsweise hydraulisch verstellbare Stützvorsprünge (46), insbesondere Stützbolzen, vorgesehen sind.

8. Vorrichtung (1) nach einem der Ansprüche 1 bis 7,
**dadurch gekennzeichnet, dass** das Anschlagstück (13) werkstückseitig drei in Umfangsrichtung zueinander beabstandete und axial über das übrige Anschlagstück (13) überstehende Haltevorsprünge (30), insbesondere Haltebolzen, aufweist, wobei die Auflagevorsprünge (29) und die Haltevorsprünge (30) vorzugsweise paarweise an in Umfangsrichtung übereinstimmenden Stellen vorgesehen sind.

9. Vorrichtung (1) nach einem der Ansprüche 1 bis 8,
**dadurch gekennzeichnet, dass** die Auflage- (29), Halte-(30) und/oder Stützvorsprünge (46) in radialer Richtung eine Breite haben, die kleiner als die Breite des zur Bearbeitung bestimmten Werkstücks (2) im Bereich der Auflage- (29), Halte- (30) und/oder Stützvorsprünge (46) ist.

10. Vorrichtung (1) nach einem der Ansprüche 1 bis 9,
**dadurch gekennzeichnet, dass** die Auflage- (29), Halte-(30) und/oder Stützvorsprünge (46) zum axialen Eingreifen in eine oder jeweils eine an dem Werkstück (2) ausgebildete, in Umfangsrichtung umlaufende Nut (31, 32) eingerichtet sind.

11. Vorrichtung (1) nach einem der Ansprüche 1 bis 10,
**dadurch gekennzeichnet, dass** eine Zentriereinrichtung (39) vorgesehen ist, welche drei an der Außenseite des Werkstücks (2) in Umfangsrichtung vorzugsweise gleichmäßig voneinander beabstandete und zumindest teilweise radial zustellbare Schubelemente (33, 34) aufweist.

12. Vorrichtung (1) nach einem der Ansprüche 1 bis 11,
**dadurch gekennzeichnet, dass** eine Steuerung, insbesondere CNC-Steuerung, vorgesehen ist, mit welcher die Zustellbewegung der Schubelemente (33, 34) steuerbar ist.

13. Vorrichtung (1) nach einem der Ansprüche 1 bis 12,
**dadurch gekennzeichnet, dass** eine Beladevorrichtung zum Einführen eines Werkstücks (2) in die Spannstelle (9) vorgesehen ist, welche Beladevorrichtung zwei Haltebereiche für je ein Werkstück (2) hat und um eine zwischen den Haltebereichen und in der Peripherie der Vorrichtung angeordnete Schwenkachse horizontal schwenkbar ist.

14. Vorrichtung (1) nach einem der Ansprüche 1 bis 13,
**dadurch gekennzeichnet, dass** ein 5-Achsen-Manipulator mit Greifvorrichtung zum Beladen der Vorrichtung (1) vorgesehen ist.

15. Vorrichtung (1) nach einem der Ansprüche 1 bis 14,
**dadurch gekennzeichnet, dass** eine vorzugsweise temperaturkompensierte Messeinrichtung vorgesehen ist, mit welcher die bearbeiteten Oberflächen des Werkstücks (2) in der Spannstelle (9) vermessbar sind.

## Claims

1. An apparatus (1) for clamping a workpiece (2), which has to be machined both on an inner side (4) and/or a front side (5, 6) and on its outer side (7), in particular by cutting, and which is preferably annular or sleeve-shaped and/or has an internal recess (43) open at the front side, wherein, in order to form a clamping point (9), the apparatus (1) has a clamping member (10) on a hollow spindle (11) capable of being driven in a rotatable manner and at a distance from the latter a coaxial, freely rotatable stop member (13), so that the workpiece (2) is capable of being clamped on front sides (5, 6) or front faces facing away from each other, wherein the freely rotatable stop member (13) is mounted in a rotatable manner in a collet (15) surrounding the clamping point (9), wherein the edge (38) of the collet (15) facing away from the rotary mounting for the stop member (13) is fastened concentrically to the clamping member (10), **characterized in that** the hollow spindle (11) is orientated vertically and carries the clamping member (10) on the upper side thereof, the stop member (13) is arranged on the collet (15) so as to be adjustable in the axial direction in order to perform the clamping and release movements, the clamping member (10) with the hollow spindle (11) surrounds a cavity (16) which is dimensioned in such a way that space is present in the cavity (16) for a slide (18) displaceable in the radial direction, and in the cavity (16) a tool holder (17) is arranged on the slide (18) so that the latter is adjustable in the axial and radial directions.

2. An apparatus (1) according to claim 1, **characterized in that** a further tool holder (20, 22), which is arranged so as to be adjustable radially and axially, is provided radially outside the clamping point (9).

3. An apparatus (1) according to claim 1 or 2, **characterized in that** in the region of the clamping point for the workpiece (2) the collet has at least one window (26) for the entry of the further tool holder (20, 22) on the outer side (7) of the workpiece (2) and/or for the supply of the workpiece (2) to the clamping point (10) [sic] .

4. An apparatus (1) according to any one of claims 1 to 3, **characterized in that** the tool holder (17) and/or the further tool holder (20, 22) on the one hand and the collet (15) and/or a drive (12) driving the clamping member (10) on the other hand are fastened on a common support means (27).

5. An apparatus (1) according to any one of claims 1 to 4, **characterized in that** the collet (15) has vertical support columns (25), preferably three support columns (25), which carry a mounting (14) of the stop member (13).

6. An apparatus (1) according to any one of claims 1 to 5, **characterized in that** on the side towards the workpiece the clamping member (10) has three bearing projections (29), in particular bearing pins, arranged at a distance from one another in the peripheral direction and projecting axially beyond the remaining clamping member (10).

7. An apparatus (1) according to any one of claims 1 to 6, **characterized in that** support projections (46), in particular support pins, adjustable axially, preferably hydraulically, are provided on the clamping member (10) in the peripheral direction between the bearing projections (29).

8. An apparatus (1) according to any one of claims 1 to 7, **characterized in that** on the side towards the workpiece the stop member (13) has three holding projections (30), in particular holding pins, arranged at a distance from one another in the peripheral direction and projecting axially beyond the remaining stop member (13), wherein the bearing projections (29) and the holding projections (30) are preferably provided in pairs at locations corresponding in the peripheral direction.

9. An apparatus (1) according to any one of claims 1 to 8, **characterized in that** the bearing projections (29), the holding projections (30) and/or the support projections (46) have a width in the radial direction which is smaller than the width of the workpiece (2) intended for machining in the region of the bearing projections (29), the holding projections (30) and/or the support projections (46).

10. An apparatus (1) according to any one of claims 1 to 9, **characterized in that** the bearing projections (29), the holding projections (30) and/or the support projections (46) are designed for axial engagement in a groove (31, 32), or in one groove (31, 32) in each case, formed on the workpiece (2) and extending in the peripheral direction.

11. An apparatus (1) according to any one of claims 1 to 10, **characterized in that** a centring device (39) is provided which has three thrust elements (33, 34) arranged preferably at a uniform distance from one another in the peripheral direction on the outside of the workpiece (2) and capable of being advanced radially at least in part.

12. An apparatus (1) according to any one of claims 1 to 11, **characterized in that** a control means, in particular a CNC control means, is provided by which the advancing movement of the thrust elements (33, 34) is capable of being controlled.

13. An apparatus (1) according to any one of claims 1 to 12, **characterized in that** a loading apparatus for the introduction of a workpiece (2) into the clamping point (9) is provided, which loading apparatus has two holding areas for one workpiece (2) in each case and is pivotable horizontally about a pivot axis situated between the holding areas and in the periphery of the apparatus.

14. An apparatus (1) according to any one of claims 1 to 13, **characterized in that** a 5-axis manipulator with a gripping apparatus is provided for loading the apparatus (1).

15. An apparatus (1) according to any one of claims 1 to 14, **characterized in that** a measuring instrument is provided which is preferably temperature-compensated and with which the machined surfaces of the workpiece (2) are capable of being measured in the clamping point (9).

## Revendications

1. Dispositif (1) pour serrer une pièce à usiner (2) par un usinage notamment par enlèvement de copeaux à la fois sur son côté intérieur (4) et/ou son côté frontal (5, 6) et aussi sur son côté extérieur (7) et qui a de préférence une forme annulaire ou une forme de manchon et/ou une cavité intérieure (43) ouverte sur le côté frontal,
- pour former un poste de serrage (9), le dispositif (1) comporte une pièce de serrage (10) sur une broche creuse (11) entraînée en rotation et à distance de celle-ci, une pièce d'appui (13) tournant librement, co-axialement de façon que la pièce (2) puisse être serrée par les faces frontales (5, 6) opposées ou surfaces frontales et la pièce d'appui (13) libre en rotation est montée à rotation dans un corps de mandrin (15) entourant le poste de serrage (9),
- le corps de mandrin (15) étant fixé par son bord (38) à l'opposé du palier de rotation pour la pièce d'appui (13), concentriquement à la pièce de serrage (10),
dispositif **caractérisé en ce que**
la broche creuse (11) est alignée verticalement et son côté supérieur porte la pièce de serrage (10),
- la pièce d'appui (13) étant réglable dans la direction axiale par rapport au corps de mandrin (15), pour effectuer le mouvement de serrage ou de libération,
- la pièce de serrage (10) enveloppant avec la broche (11) une cavité (16) dimensionnée pour que cette cavité (16) ait la place pour un chariot (18) mobile dans la direction radiale, et
- le chariot (18) est muni d'un porte-outil (17) dans la cavité (16) de façon que l'outil soit réglable dans la direction axiale et dans la direction radiale.

2. Dispositif (1) selon la revendication 1,
**caractérisé en ce que**
un autre porte-outil (20, 22) réglable radialement et axialement en étant situé radialement à l'extérieur du poste de serrage (9).

3. Dispositif (1) selon la revendication 1 ou 2,
**caractérisé en ce que**
dans la zone du point de serrage de la pièce à usiner (2), le corps de mandrin a au moins une fenêtre (26) pour l'accès de l'autre porte-outil (20, 22) au côté extérieur (7) de la pièce (2) et/ou pour amener la pièce à usiner (2) à la pièce de serrage (10).

4. Dispositif (1) selon l'une des revendications 1 à 3,
**caractérisé en ce que**
d'une part le porte-outil (17) et/ou l'autre porte-outil (20, 22) et d'autre part un entraînement (12) pour la pièce de serrage (10) et/ou le corps de mandrin (15) sont fixés à un support commun (27).

5. Dispositif (1) selon l'une des revendications 1 à 4,
**caractérisé en ce que**
le corps de mandrin (15) comporte des colonnes de support (25), verticales, de préférence trois colonnes de support (25) portant le palier (14) de la pièce de fixation (13).

6. Dispositif (1) selon l'une des revendications 1 à 5,
**caractérisé en ce que**
la pièce de serrage (10) comporte côté pièce à usiner, trois organes d'appui en saillie (29) notamment des goujons d'appui écartées les unes des autres dans la direction périphérique et dépassant axialement la pièce de serrage (10).

7. Dispositif (1) selon l'une des revendications 1 à 6,
**caractérisé en ce que**
dans la direction périphérique, entre les organes d'appui en saillie (29) la pièce de serrage (10) comporte des pièces de support en saillie (46) notamment des goujons d'appui, réglables axialement, de préférence hydrauliquement.

8. Dispositif (1) selon l'une des revendications 1 à 7,
**caractérisé en ce que**
la pièce d'appui (13) comporte côté pièce à usiner, trois pièces de fixation en saillie (30) écartées dans la direction périphérique et qui dépassent axialement du restant de la pièce d'appui (13), notamment des goujons de fixation, les organes d'appui en saillie (29) et les pièces en saillie de fixation (30) étant prévus de préférence par paire, dans des endroits en concordance dans la direction périphérique.

9. Dispositif (1) selon l'une des revendications 1 à 8,
**caractérisé en ce que**
les organes d'appui en saillie (29) et les pièces de fixation (30) et/ou les pièces de support (46) ont dans la direction radiale, une largeur inférieure à la largeur de la pièce (2) destinée à usiner dans la zone des organes d'appui (29), des pièces de fixation (30) et/ou des pièces de support (46).

10. Dispositif (1) selon l'une des revendications 1 à 9,
**caractérisé en ce que**
les organes d'appui en saillie (29), les pièces de fixation (30) et/ou les pièces de support (46) sont destinés à prendre axialement dans l'une des rainures périphériques (31, 32) réalisée dans la pièce à usiner (2).

11. Dispositif (1) selon l'une des revendications 1 à 10,
**caractérisé par**
une installation de centrage (39) ayant trois éléments de poussée (33, 34) réglables au moins en partie radialement et qui sont appuyés contre le côté extérieur de la pièce à usiner (2) dans la direction périphérique, sont de préférence écartés régulièrement.

12. Dispositif (1) selon l'une des revendications 1 à 11,
**caractérisé par**
une commande notamment une commande numérique CNC qui commande le mouvement de réglage des éléments de poussée (33, 34).

13. Dispositif (1) selon l'une des revendications 1 à 12,
**caractérisé par** un
dispositif de chargement pour introduire une pièce à usiner (2) dans le poste de serrage (9), ce dispositif de chargement ayant deux zones de fixation pour une pièce à usiner (2) et il peut être pivoté horizontalement autour d'un axe de pivotement installé entre les zones de fixation et la périphérie du dispositif.

14. Dispositif (1) selon l'une des revendications 1 à 13,
**caractérisé par**
un manipulateur à cinq axes avec un dispositif de préhension pour charger le dispositif (1).

15. Dispositif (1) selon l'une des revendications 1 à 14,
**caractérisé par**
une installation de mesure, de préférence compensée en température pour mesurer la surface usinée de la pièce (2) installée dans le poste de serrage (9).
